(19) Europäisches Patentamt
European Patent Office
Office européen des brevets

(11) **EP 1 416 770 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**20.05.2009 Patentblatt 2009/21**

(51) Int Cl.:
*H05B 1/02* (2006.01)    *G05D 23/19* (2006.01)

(45) Hinweis auf die Patenterteilung:
**04.08.2004 Patentblatt 2004/32**

(21) Anmeldenummer: **02024503.1**

(22) Anmeldetag: **30.10.2002**

(54) **Elektrische Heizvorrichtung mit mehreren Heizelementen**

Electrical heating device with several heating elements

Dispositif de chauffage électrique possédant plusieurs éléments chauffants

(84) Benannte Vertragsstaaten:
**AT BE BG CH CY CZ DE DK EE ES FI FR GB GR IE IT LI LU MC NL PT SE SK TR**

(43) Veröffentlichungstag der Anmeldung:
**06.05.2004 Patentblatt 2004/19**

(73) Patentinhaber: **Catem GmbH & Co.KG**
**76863 Herxheim (DE)**

(72) Erfinder: **Probst, Frank**
**76863 Herxheim (DE)**

(74) Vertreter: **Grünecker, Kinkeldey, Stockmair & Schwanhäusser Anwaltssozietät Leopoldstrasse 4 80802 München (DE)**

(56) Entgegenhaltungen:
**EP-A- 1 091 621     EP-A- 1 157 868**
**EP-A- 1 157 869**

**Beschreibung**

Die Erfindung betrifft eine elektrische Heizvorrichtung gemäß dem Oberbegriff des Patentanspruchs 1. Eine solche elektrische Heizvorrichtung eignet sich insbesondere für den Einsatz als elektrische Zusatzheizung in Kraftfahrzeugen.

In Kraftfahrzeugen werden elektrische Heizvorrichtungen u.a. zur Erwärmung der Innenraumluft, zur Vorheizung von Kühlwasser bei wassergekühlten Motoren oder zur Erwärmung von Kraftstoff verwendet. Derartige elektrische Zusatzheizungen bestehen üblicherweise aus mindestens einer Heizstufe mit Heizelementen und einer Steuervorrichtung. Die Heizelemente sind in der Regel als Heizwiderstand, insbesondere als PTC-Element ausgebildet. Die Heizung und die Steuereinheit können sowohl als getrennte Funktionseinheiten ausgebildet als auch zu einer Baueinheit zusammengefasst sein.

In EP-A2-1 157 868 ist eine elektrische Heizvorrichtung beschrieben, bei der sowohl die Heizelemente als auch eine Steuereinrichtung in einer Baueinheit zusammengefasst sind. Zur Ansteuerung der Heizelemente ist eine Mehrzahl von Steuerungskonzepten dargestellt, die nachfolgend kurz zusammengefasst werden.

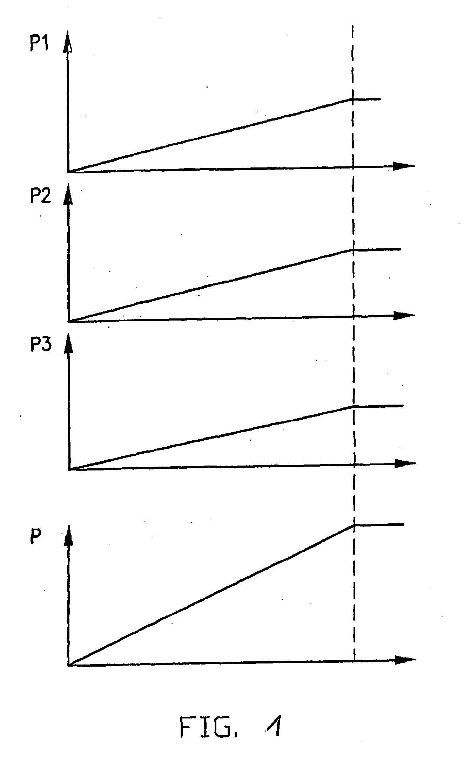

Eine Leistungsregelung für eine elektrische Heizvorrichtung besteht im einfachsten Fall aus mehreren separaten Heizelementen und einer identischen Ansteuerung aller Heizelemente. Eine solche Ansteuerung ist am Beispiel von drei Heizstufen in Fig. 1 wiedergegeben. Die Heizleistung der einzelnen Heizstufen P1, P2 und P3 ist jeweils untereinander, oberhalb der Gesamtheizleistung P (im untersten Diagramm) dargestellt. Bei steigendem Heizbedarf werden die einzelnen Heizelemente gleichmäßig ausgesteuert, so dass jedes der einzelnen Heizelemente eine zunehmend größere Heizleistung erzeugt. Dabei entspricht die Gesamtheizleistung P der Summe der Einzelheizleistungen P1 bis P3.

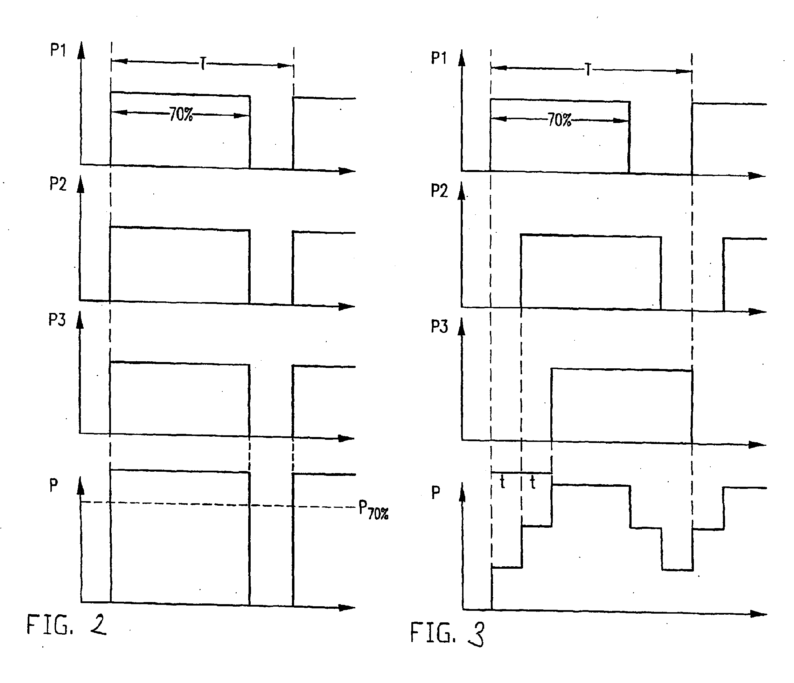

Zur Ansteuerung von elektrischen Lasten wird häufig die sog. Puls-Weiten-Modulation (PWM) eingesetzt. Sie zeichnet sich durch eine besonders einfache technische Umsetzbarkeit aus. In Fig. 2 ist eine solche getaktete Ansteuerung dargestellt. Jeder Heizkreis der Heizvorrichtung wird von einer Steuereinrichtung mit einer festen Frequenz F und der Periode T getaktet. Die Leistung jedes einzelnen Heizelementes ergibt sich dabei aus dem Taktverhältnis. Durch eine Modulation der Breite der Pulse ist es möglich, die Heizleistung zu variieren.

Die in Fig. 2 gezeigte Leistungsregelung entspricht prinzipiell der unter Bezugnahme auf Fig. 1 beschriebenen linearen Ansteuerung. Demgemäß werden zur Erzeugung einer vorgegebenen Gesamtheizleistung alle Heizelemente gleichmäßig angesteuert. Bei zunehmender Gesamtheizleistung nimmt die Heizleistung der einzelnen Heizelemente entsprechend zu. Das Tastverhältnis in Fig. 2 beträgt beispielsweise 70 % für jeden der Pulse. Es wird demgemäß 70 % der maximal möglichen Heizleistung erzeugt. Im untersten Diagramm der Fig. 2 gibt die gestrichelte Linie mit der Bezeichnung $P_{70\%}$ die gemittelte effektive Heizleistung aller Heizelemente der Heizvorrichtung an. Die durchgezogene Linie gibt dagegen jeweils die Momentanleistung an.

Um EMV-Probleme beim Einsatz der Puls-Weiten-Modulation zu vermindern, werden Verbraucher "sanft" ein- und ausgeschaltet, d.h. mit einer relativ langsamen Flanke. Da jedoch die dazu benötigten Leistungsschalter während einer solchen Flanke im linearen Betrieb angesteuert werden, wird gleichzeitig eine erhebliche momentane Verlustleistung erzeugt. Solche "Flankenverluste" können bei der Ansteuerung elektrischer Zusatzheizungen einen bedeutenden Anteil an der gesamten Verlustleistung der jeweiligen Schalter ausmachen.

Nachteilig an einer solchen Ansteuerung gemäß Fig. 2 ist die zeitliche Schwankung der von den Heizelementen erzeugte Heizleistung. Ein weiteres Problem sind sehr große Stromspitzen auf der Zuleitung, da alle Verbraucher gleichzeitig ein- bzw. ausgeschaltet werden.

Um solche zeitlichen Schwankungen bei der Wärmeabgabe zu vermeiden, können die Heizelemente einer elektrischen Heizung bei Verwendung einer Puls-Weiten-Modulation mit zeitlichem Versatz angesteuert werden. Ein Beispiel für eine solche Ansteuerung ist in Fig. 3 wiedergegeben. Dabei werden die drei dargestellten Heizelemente mit einem zeitlichen Versatz t getaktet. Die jeweilige aktive Pulsbreite ist für die einzelnen Stufen über eine ganze Periode T eines Taktes verteilt.

In einem solchen Verfahren wird im Summenstrom der Verbraucher, d.h. der Heizelemente, die n-fache (n = Kanalzahl) Frequenzkomponente sichtbar. Dadurch ist bei gleichbleibender Summenstromfrequenz eine verhältnismäßig niedrige Puls-Weiten-Modulations-Frequenz möglich.

Bei einem Einsatz solcher elektrischer Heizvorrichtungen in Kraftfahrzeugen hat die Summenstromfrequenz Einfluss auf das gesamte KFZ-Bord-Netz und kann als störendes Lichtflimmern wahrgenommen werden, sobald die visuellen Wahrnehmungsgrenzen unterschritten werden.

Wie oben erwähnt entstehen bei der Ansteuerung über eine Puls-Weiten-Modulation generell Flankenverluste. Diese Flankenverluste treten bei jedem Ein- und Ausschalten auf, so dass ihr Anteil mit steigender Ansteuerfrequenz linear zunimmt. Die Ansteuerfrequenz darf jedoch auch bestimmte Untergrenzen nicht unterschreiten, damit das Lichtflimmern nicht wahrnehmbar wird. Es verbleibt für eine sinnvolle Ansteuerfrequenz damit nur ein bestimmter Korridor, innerhalb dessen die Ansteuerfrequenz variierbar ist.

Die Größe der Flankenverluste ergibt sich gemäß folgender Gleichung:

$$P_{Edge} = \left[ \frac{W_{Rising\,Edge}}{T_{PWM}} + \frac{W_{Falling\,Edge}}{T_{PWM}} \cdot n \right] \qquad (1)$$

Dabei bezeichnet $P_{Edge}$ die durch die Flanken verursachte Verlustleistung, $W_{Rising\,Edge}$ die in einem Leistungs-schalter umgesetzte Energie während einer steigenden Flanke, $W_{Falling\,Edge}$ die in einem Leistungsschalter umgesetzte Energie während einer fallenden Flanke, $T_{PWM}$ die Periodendauer der Puls-Weiten-Modulation und n die Anzahl der Kanäle, d.h. die Anzahl der separat angesteuerten Heizelemente.

Solche Flankenverluste können mit verbesserten Ansteuerungsverfahren deutlich reduziert werden. Dazu ist bei einem verbesserten Ansteuerungsverfahren für eine elektrischen Heizvorrichtung die Heizleistung nur eines der Heizelemente variabel einstellbar. Alle weiteren Heizelemente können nur zu- oder abgeschaltet werden, d.h. sie sind entweder nur unter Volllast oder Nulllast betreibbar. Diese Heizelemente werden je nach Bedarf zu- bzw. abgeschaltet. Für eine "Feinabstimmung" der zu erzeugenden Heizleistung wird das kontinuierlich einstellbare Heizelement mit einem variablen Heizleistungsbeitrag zugeschaltet.

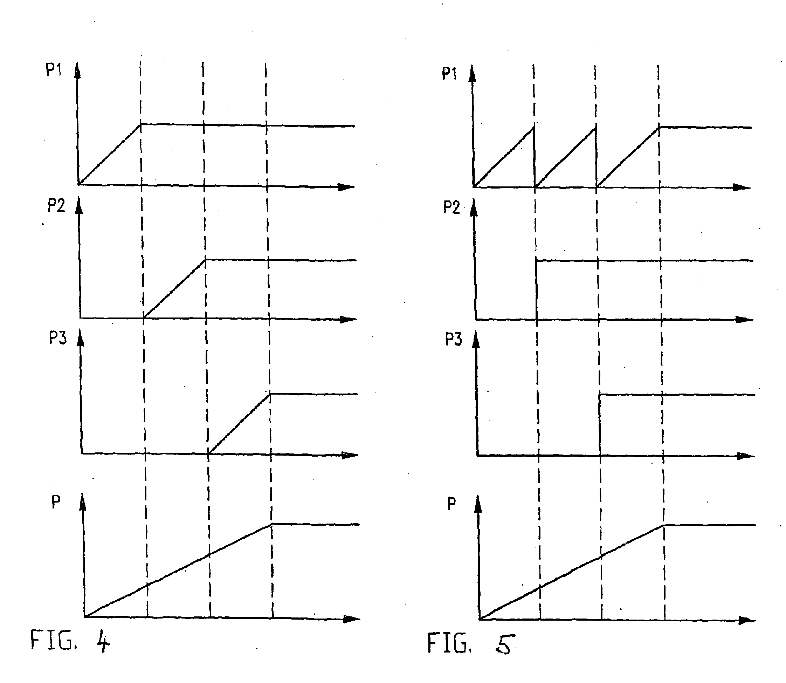

Bei Kombination dieses Konzepts mit der Puls-Weiten-Modulation werden nicht ständig alle Kanäle getaktet, sondern es wird lediglich die Heizleistung des kontinuierlich einstellbaren Kanals über eine PWM eingestellt. Eine entsprechende Ansteuerung ist in Fig. 4 und Fig. 5 wiedergegeben. Die Heizleistung eines Heizelementes wird soweit erhöht, bis das Heizelement am Maximum seiner erbringbaren Heizleistung angelangt ist. Anschließend wird dieses Heizelement ohne Taktung, d.h. ohne Puls-Weiten-Modulation, weiter bestromt. Bei einer weiteren Erhöhung der zu erbringenden Heizleistung wird diese über eine Puls-Weiten-Modulation des nächsten Heizelements erbracht. Dieser Vorgang wird fortgesetzt, bis alle Heizelemente ständig eingeschaltet sind. Fig. 5 zeigt eine Alternative, bei der nur die Heizleistung eines der Heizelemente kontinuierlich einstellbar ist, wohingegen die anderen Heizelemente nur zu- bzw. abgeschaltet werden.

Auf diese Weise kann die gleiche erzeugte Heizleistung mit geringeren Flankenverlusten erzeugt werden. Die dabei auftretenden Flankenverluste werden durch die folgende Gleichung wiedergegeben:

$$P_{Edge} = \frac{W_{Rising\,Edge}}{T_{PWM}} + \frac{W_{Falling\,Edge}}{T_{PWM}} \qquad (2)$$

Dadurch, dass lediglich eines der Heizelemente zur gleichen Zeit über eine PWM angesteuert wird, werden die Flankenverluste im Vergleich zur vorherigen Gleichung auf 1/n reduziert.

Nachteilig bei einer solchen Heizleistungsregelung ist jedoch die inhomogene Erwärmung des Heizblocks durch die einzelnen Heizelemente. Dadurch wird das zu erwärmende Medium lokal ungleichmäßig beheizt und weist somit Zonen unterschiedlicher Temperatur auf.

Aufgabe der Erfindung ist es, eine elektrische Heizvorrichtung mit gleichmäßiger Erwärmung der Heizelemente bei gleichzeitig niedriger Verlustleistung und ein Verfahren zur Ansteuerung einer solchen elektrischen Heizvorrichtung anzugeben.

Diese Aufgabe wird mit dem Merkmal des Anspruchs 1 für eine elektrische Heizvorrichtung und mit den Merkmalen des Anspruchs 9 für ein Ansteuerungsverfahren gelöst.

Erfindungsgemäß wird die Zuordnung der Ansteuerungssignale zu den Heizelementen in vorgegebenen Zeitabständen variiert. Zur Ansteuerung einer solchen elektrischen Heizvorrichtung werden dabei die den Heizelementen zugeführten Ströme jeweils vertauscht, so dass die Heizelemente nacheinander von unterschiedlichen "Ansteuerungskanälen" der Steuereinheit angesteuert werden. Dadurch kann im zeitliche Mittel eine homogenere Erwärmung des aufzuheizenden Mediums erreicht werden.

Gemäß einer bevorzugten Ausführungsform wird die Zuordnung durch Permutation oder Rotation aller Zuordnungen verändert. Dadurch kann eine homogene Erwärmung des aufzuheizenden Mediums erreicht werden, da jedem Heizelement jeder "Kanal" der Vorrichtung aufeinanderfolgend zugeordnet wird.

Ungleichmäßigkeiten in dem zu erwärmenden Medium können auf diese Weise insbesondere dann vermieden werden, wenn ein Ansteuerungsschema verwendet wird, bei dem einzelne Heizelemente zwischen maximaler Heizleistung und Nullleistung umgeschaltet werden.

Bei Verwendung einer Umschaltung zwischen maximaler Heizleistung und Nuilleistung zur Ansteuerung von Heizelementen ist wenigstens ein Ansteuerkanal erforderlich, dessen Heizleistung kontinuierlich einstellbar ist. Vorteilhafterweise wird ein kontinuierlich einstellbarer Ansteuerungskanal und im übrigen Kanäle mit einer Umschaltung zwischen maximaler Heizleistung und Nullleistung verwendet. Bei einer solchen Ansteuerung ist eine geringere Verlustleistung bei gleichzeitig feinerer Heizleistungseinstellung möglich.

Vorteilhafterweise wird zur Ansteuerung der kontinuierlich einstellbaren Heizleistung eine Puls-Weiten-Modulation verwendet. Die Zeitabstände, in denen die Zuordnungen verändert werden, sind vorzugsweise ein ganzzahliges Vielfaches einer Periode der Puls-Weiten-Modulation. Auf diese Weise lassen sich die Flankenverluste durch Umschaltungen besonders klein halten.

Vorteilhafte Ausgestaltungen der Erfindung sind Gegenstand der Unteransprüche.

Die Erfindung wird im Folgenden anhand der beiliegenden Figuren beschrieben, in denen:

Fig. 1        ein Steuerkonzept zur gleichmäßigen Ansteuerung von drei Heizelementen zeigt,

Fig. 2        ein Beispiel für eine getaktete Steuerung der Heizleistung darstellt,

Fig. 3        eine getaktete Steuerung der Heizleistung mit einem Zeitversatz der einzelnen Ansteuerungskanäle darstellt,

Fig. 4 und 5     Varianten eines Ansteuerungskonzeptes zeigen, bei dem gleichzeitig immer nur ein Heizelement zwischen Nulllast und maximaler Heizleistung betrieben wird,

Fig. 6a und 6b    einer Aufsicht bzw. Seitenansicht einer erfindungsgemäßen elektrischen Heizvorrichtung zeigen,

Fig. 7        die Grundschaltung einer erfindungsgemäßen elektrischen Heizvorrichtung mit drei Heizelementen zeigt, und

Fig. 8        ein Beispiel für eine rotierende Ansteuerung der Heizelemente einer elektrischen Heizvorrichtung zeigt.

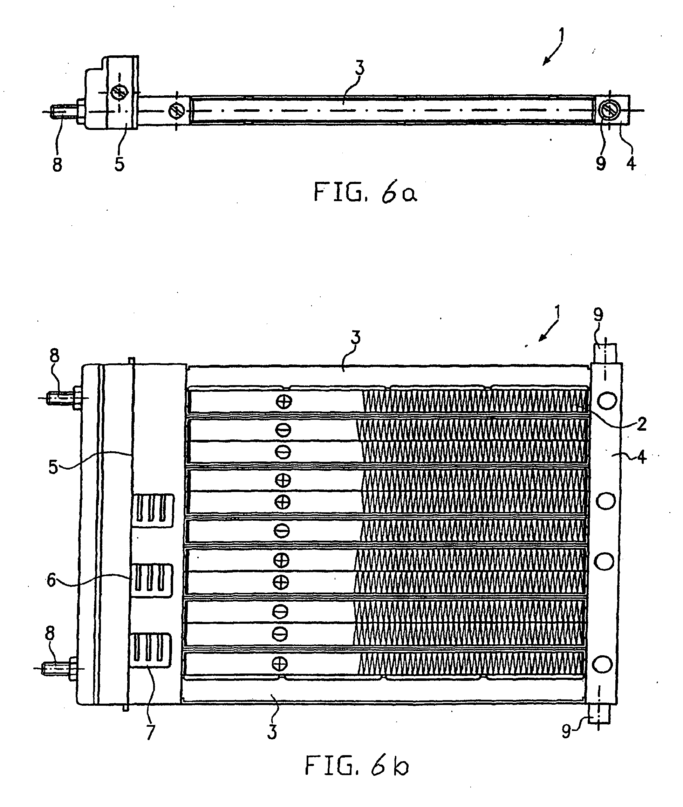

Fig. 6a zeigt eine Seitenansicht der erfindungsgemäßen elektrischen Heizvorrichtung 1, die insbesondere für den Einsatz in Kraftfahrzeugen geeignet ist. Fig. 6b zeigt eine Aufsicht auf die elektrische Heizvorrichtung 1. Die elektrische Heizvorrichtung 1 enthält einen Heizblock, der aus einer Mehrzahl geschichteter oder gestapelter Heizelemente 2 besteht. Jedes Heizelement 2 besteht aus wenigstens einem Widerstandsheizelement mit benachbart dazu angeordneten Radiatoren oder Wärmeleitflächen. Als Widerstandsheizelemente werden vorzugsweise PTC-Elemente verwendet. Der Heizblock aus den Heizelementen 2 wird in einem Rahmen gehalten. Dieser Rahmen besteht aus gegenüberliegenden Längsholmen 3 und senkrecht dazu angeordneten Seitenholmen 4 und 5. Im Gegensatz zum Seitenholm 4 ist der Seitenholm 5 als einseitig offener Kasten ausgebildet. Die Öffnung dieses kastenförmigen Seitenholms 5 liegt auf der den Heizelementen 2 gegenüberliegenden Seite des Seitenholms 5. In diesen Kasten ist eine Steuervorrichtung einsetzbar, die die Wärmeabgabe der einzelnen Heizelemente 2 durch Steuerung des den Heizelementen 2 zugeführten Stroms steuert. Die offene Seite des als Kasten ausgebildeten Seitenholms 5 wird nach dem Einsetzen der Steuerschaltung mit einem aufgedeckten oder aufklipsbaren Deckel verschlossen. Die elektrische Heizvorrichtung 1 wird über zwei Anschlussbolzen 8 mit Strom versorgt. Diese sind so ausgebildet, dass sie problemlos die geforderten Heizströme leiten können. Der Seitenholm 5 besitzt gemäß einer besonderen Ausführungsform in den Seiten Fensteröffnungen 7. Diese Fensteröffnungen 7 sind so angeordnet, dass sie ebenfalls in dem Strom des zu erwärmenden Mediums liegen. Zwischen den sich gegenüberliegenden Fensteröffnungen 7 sind Kühlelemente 6 angeordnet, die die Verlustwärme von den Leistungselektronikbauelementen der Steuerschaltung abführen.

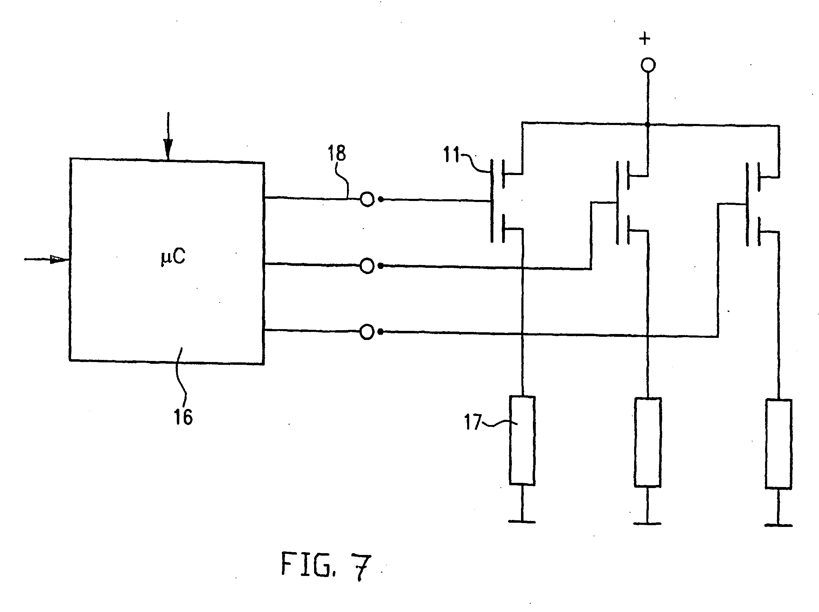

Die Grundschaltung einer elektrischen Heizvorrichtung als Zusatzheizung gemäß der vorliegenden Erfindung ist in Fig. 7 wiedergegeben. Eine Steuereinheit 16, vorzugsweise eine Recheneinheit bzw. ein Mikrocomputer, steuert die Heizleistung mehrerer elektrischer Heizwiderstände 17. Die hohen Ströme, die zur Erzielung einer Gesamtheizleistung im Bereich zwischen 1000 bis 2000 Watt erforderlich sind, werden über Leistungshalbleiter 11, insbesondere Leistungstransistoren, den elektrischen Heizwiderständen 17 zugeführt. Die Steuervorrichtung 16 bestimmt die Strommenge, die von den Transistoren 11 an die Widerstände 17 geleitet wird, und zwar in Abhängigkeit von dem verwendeten Steuerverfahren und vorgegebenen Sollwerten. Dazu ist die Recheneinheit 16 über Leitungen 18 separat mit jedem der Leistungstransistoren 11 verbunden.

Die Gesamtheizleistung, die von den Heizwiderständen erzeugt wird, regelt die Recheneinheit 16 in Abhängigkeit von der erwünschten Heizleistung. Zusätzlich kann auch die maximal zur Verfügung stehende Generatorleistung in einem Kraftfahrzeug zur Steuerung mitberücksichtigt werden.

Aus dem Stand der Technik sind verschiedene Leistungsregelungskonzepte bekannt, bei denen beispielsweise mehrere, unabhängige Heizelemente je nach gewünschter Gesamtheizleistung gleichmäßig angesteuert werden oder sequenziell angesteuert werden. Erfindungsgemäß trägt jeder Heizwiderstand im Wesentlichen mit im zeitlichen Mittel gleichem Heizleistungsbeitrag zur Gesamtheizleistung bei. Dazu wird die Zuordnung der von der Steuervorrichtung 16 erzeugten Ansteuersignale ("Kanäle") zu den einzelnen Heizelementen mit vorgegebenen Zeitabständen variiert, insbesondere rotiert oder permutiert. Dadurch werden Ungleichmäßigkeiten der Erwärmung über den gesamten Heizblock verteilt und Zonen ungleichmäßiger Erwärmung werden in dem zu erwärmenden Luftstrom vermieden.

Vorzugsweise sind die Zeitabstände so gewählt, dass unter Ausnutzung der thermischen Trägheit der Heizelemente eine homogene Erwärmung bewirkt wird.

Unter Verwendung einer Puls-Weiten-Modulation entspricht die Zeitspanne, d.h. die Rotationsperiode ($T_R$), einem ganzzahligen Vielfachen k der PWM-Periode $T_{PWM}$. Die Anzahl der dabei erzeugten Flanken hängt von der angeforderten Heizleistung ab, nämlich insbesondere davon, ob sich der Ein/Aus-Schaltzustand eines Heizelements durch die Zuordnungsveränderung ändert. Da die Anzahl der Flanken die Höhe der erzeugten Verlustleistung bestimmt, gilt für die maximale Flankenanzahl, die dann entsteht, wenn ein einziger getakteter Kanal für die "Feinabstimmung" der Heizleistung verwendet wird und die verbleibenden Kanäle jeweils entweder ein- und ausgeschaltet werden, die folgende Gleichung:

$$P_{Edge} = \left[ \frac{W_{Rising\,Edge}}{T_{PWM}} + \frac{W_{Falling\,Edge}}{T_{PWM}} \right] \cdot \frac{k+1}{k} \qquad (3)$$

Wird der Zeitabstand, d.h. die Rotations- bzw. Permutationsperiode, sehr groß gewählt (d.h. $k \to \infty$), so geht die Gleichung (3) in die Gleichung (2) über.

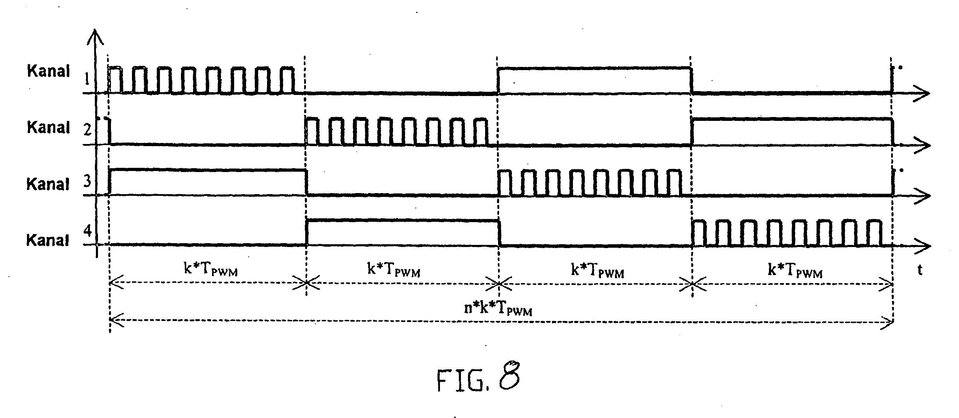

Fig. 8 zeigt ein Beispiel für eine rotierende Ansteuerung der Heizelemente mit vier "Ansteuerungskanälen". Die Ansteuerungskanäle werden gemäß einem vorgegebenen Rotationsschema den Heizelementen 17 zugeordnet. Die Periodendauer $T_R$ ist so gewählt, dass sie achtmal so groß wie einer PWM-Periode $T_{PWM}$ ist.

Bei einem Wert von k von acht für das Verhältnis der Ansteuerungsrotationszeitspanne zur PWM-Periode wird gegenüber dem bekannten Verfahren mit einem getakteten Kanal und ohne Rotation (Gleichung 2) ein zusätzlicher Flankenverlust von 12,5 % erzeugt. Gegenüber dem Verfahren, bei dem alle Kanäle gleichmäßig getaktet werden (Gleichung 1), wird dagegen eine Verminderung der Flankenverluste von 71,9 % bei diesem Beispiel erreicht.

Außerdem kann durch die individuellere Ansteuerung bei dem Verfahren mit rotierender Kanalzuordnung die Gesamtleistung sehr viel feiner dosiert werden als bei einer gleichmäßigen Ansteuerung der Heizelemente gemäß Gleichung 1.

Zusammenfassend betrifft die Erfindung eine elektrische Heizvorrichtung und ein Verfahren zur Ansteuerung einer solchen Heizvorrichtung, mit denen eine homogene Erwärmung eines Heizregisters erreicht werden soll. Dazu werden die Zuordnungen zwischen den Ansteuerungskanälen einer Steuervorrichtung und den Heizelementen in vorgegebenen Zeitabständen variiert.

**Patentansprüche**

1. Elektrische Heizvorrichtung, insbesondere als Zusatzheizung für Kraftfahrzeuge, mit mehreren zu einem Heizblock zusammengesetzten Heizelementen (17), die jeweils separat ansteuerbar sind, und einer Steuervorrichtung (16) zur Ansteuerung der Heizelemente (17), wobei die Heizleistung für jedes der Heizelemente (17) separat einstellbar ist,
   **dadurch gekennzeichnet, dass**
   die Steuervorrichtung (16) so eingerichtet ist, dass bei der Ansteuerung der einzelnen Heizelemente (17) eine Zuordnung der jeweils separat einstellbaren Heizleistung zu den einzelnen Heizelementen (17) in vorgegebenen Zeitabständen ($T_R$) änderbar ist, wobei die Zuordnung der jeweils separat eingestellten Heizleistungen zu den einzelnen Heizelementen in den vorgegebenen Zeitabständen geändert wird, und zwar durch Vertauschung der den Heizelementen (17) angeführten Ströme.

2. Elektrische Heizvorrichtung nach Anspruch 1, **dadurch gekennzeichnet, dass** die Änderung der Zuordnung eine Permutation oder eine Rotation der Zuordnung der jeweils separat eingestellten Heizleistungen zu den einzelnen Heizelementen (17) darstellt.

3. Elektrische Heizvorrichtung nach Anspruch 1 oder 2, **dadurch gekennzeichnet, dass** die Steuervorrichtung (16) wenigstens eines der Heizelemente (17) über eine Umschaltung zwischen maximaler Heizleistung und Nullleistung

angesteuert.

**4.** Elektrische Heizvorrichtung nach einem der Ansprüche 1 bis 3, **dadurch gekennzeichnet, dass** die Steuervorrichtung (16) wenigstens eines der Heizelemente (17) über eine im Wesentlichen kontinuierlich einstellbare Heizleistung ansteuert.

**5.** Elektrische Heizvorrichtung nach Anspruch 3 oder 4, **dadurch gekennzeichnet, dass** die Steuervorrichtung (16) eines der Heizelemente (17) über eine kontinuierlich einstellbare Heizleistung ansteuert und alle weiteren Heizelemente (17) über eine Umschaltung zwischen maximaler Heizleistung und Nullleistung ansteuert.

**6.** Elektrische Heizvorrichtung nach Anspruch 4 oder 5, **dadurch gekennzeichnet, dass** die Steuervorrichtung (16) das wenigstens eine Heizelement (17), dessen Heizleistung kontinuierlich einstellbar ist, über eine Puls-Weiten-Modulation ansteuert.

**7.** Elektrische Heizvorrichtung nach Anspruch 6, **dadurch gekennzeichnet, dass** die vorgegebenen Zeitabstände ($T_R$) ein ganzzahliges Vielfaches (k) einer Periode ($T_{PWM}$) der Puls-Weiten-Modulation darstellen.

**8.** Elektrische Heizvorrichtung nach Anspruch 7, **dadurch gekennzeichnet, dass** die Heizvorrichtung insgesamt vier separat ansteuerbare Heizelemente (17) umfasst und die vorgegebenen Zeitabstände ($T_R$) dem Achtfachen der Periode ($T_{PWM}$) der Puls-Weiten-Modulation entsprechen.

**9.** Verfahren zur Ansteuerung einer elektrischen Heizvorrichtung, insbesondere als Zusatzheizung für Kraftfahrzeuge, mit mehreren zu einem Heizblock zusammengesetzten Heizelementen (17), die jeweils separat ansteuerbar sind, wobei die Heizleistung separat für jedes der Heizelemente (17) eingestellt wird,
**dadurch gekennzeichnet, dass**
die Zuordnung der jeweils separat eingestellten Heizleistungen zu den einzelnen Heizelementen (17) in vorgegebenen Zeitabständen ($T_R$) geändert wird, und zwar durch Vertauschen der den Heizelementen (17) angeführten Ströme.

**10.** Verfahren nach Anspruch 9, **dadurch gekennzeichnet, dass** die Änderung der Zuordnung eine Permutation oder eine Rotation der Zuordnungen der jeweils separat eingestellten Heizleistungen zu den einzelnen Heizelementen (17) darstellt.

**11.** Verfahren nach Anspruch 9 oder 10, **dadurch gekennzeichnet, dass** eines der Heizelemente (17) über eine Umschaltung zwischen maximaler Heizleistung und Nullleistung angesteuert wird.

**12.** Verfahren nach einem der Ansprüche 9 bis 11, **dadurch gekennzeichnet, dass** wenigstens eines der Heizelemente (17) über eine im Wesentlichen kontinuierlich einstellbare Heizleistung angesteuert wird.

**13.** Verfahren nach Anspruch 11 oder 12, **dadurch gekennzeichnet, dass** eines der Heizelemente (17) über eine kontinuierlich einstellbare Heizleistung angesteuert wird und alle weiteren Heizelemente (17) über eine Umschaltung zwischen maximaler Heizleistung und Nullleistung angesteuert werden.

**14.** Verfahren nach Anspruch 12 oder 13, **dadurch gekennzeichnet, dass** das wenigstens eine Heizelement (17), dessen Heizleistung kontinuierlich einstellbar ist, über eine Puls-Weiten-Modulation angesteuert wird.

**15.** Verfahren nach Anspruch 14, **dadurch gekennzeichnet, dass** die vorgegebene Zeitabstände ($T_R$) ein ganzzahliges Vielfaches (k) einer Periode ($T_{PWM}$) einer Puls-Weiten-Modulation darstellen.

**Claims**

**1.** An electric heating device used especially as an auxiliary heating for motor vehicles and comprising a plurality of heating elements (17), which are combined so as to form a heating block and each of which is adapted to be controlled separately, and a control device (16) for controlling the heating elements (17), the heating power for each of said heating elements (17) being adapted to be adjusted separately,
**characterized in that**
the control device (16) is configured such that, when control of the individual heating elements (17) is effected, an allocation of the respective separately adjustable heating powers to the individual heating elements (17) can be changed at a predetermined time intervals ($T_R$), wherein the allocation of the respective separately adjusted heating powers to the individual heating elements is changed at the predetermined time intervals, namely by exchanging the currents supplied to the heating elements (17).

2. An electric heating device according to claim 1, **characterized in that** the change of allocation represents a permutation or a rotation of the allocations of the respective separately adjusted heating powers to the individual heating elements (17).

3. An electric heating device according to claim 1 or 2, **characterized in that** the control device (16) controls at least one of the heating elements (17) through switching over between the maximum heating power and zero power.

4. An electric heating device according to one of the claims 1 to 3, **characterized in that** the control device (16) controls at least one of the heating elements (17) via a substantially continuously adjustable heating power.

5. An electric heating device according to claim 3 or 4, **characterized in that** the control device (16) controls one of the heating elements (17) via a continuously adjustable heating power and all the other heating elements (17) through switching over between the maximum heating power and zero power.

6. An electric heating device according to claim 4 or 5, **characterized in that** the control device (16) controls the at least one heating element (17), whose heating power is continuously adjustable, via a pulse width modulation.

7. An electric heating device according to claim 6, **characterized in that** the predetermined time intervals ($T_R$) represent an integer multiple (k) of a period ($T_{PWM}$) of the pulse width modulation.

8. An electric heating device according to claim 7, **characterized in that** the heating device comprises a total of four separately controllable heating elements (17) and that the predetermined time intervals ($T_R$) are equal to eight times the period ($T_{PWM}$) of the pulse width modulation.

9. A method of controlling an electric heating device, used especially as an auxiliary heating for motor vehicles and comprising a plurality of heating elements (17), which are combined so as to form a heating block and each of which is adapted to be controlled separately, the heating power for each of said heating elements (17) being adjusted separately,
   **characterized in that**
   the allocation of the respective separately adjusted heating powers to the individual heating elements (17) is changed at predetermined time intervals ($T_R$), namely by exchanging the currents supplied to the heating elements (17).

10. A method according to claim 9, **characterized in that** the change of allocation represents a permutation or a rotation of the allocations of the respective separately adjusted heating powers to the individual heating elements (17).

11. A method according to claim 9 or 10, **characterized in that** one of the heating elements (17) is controlled through switching over between the maximum heating power and zero power.

12. A method according to one of the claims 9 to 11, **characterized in that** at least one of the heating elements (17) is controlled via a substantially continuously adjustable heating power.

13. A method according to claim 11 or 12, **characterized in that** one of the heating elements (17) is controlled via a continuously adjustable heating power and that all the other heating elements (17) are controlled through switching over between the maximum heating power and zero power.

14. A method according to claim 12 or 13, **characterized in that** the at least one heating element (17) whose heating power is continuously adjustable is controlled via a pulse width modulation.

15. A method according to claim 14, **characterized in that** the predetermined time intervals ($T_R$) represent an integer multiple (k) of a period ($T_{PWM}$) of a pulse width modulation.

**Revendications**

1. Dispositif de chauffage électrique, en particulier comme chauffage d'appoint pour véhicules automobiles, comportant un bloc chauffant regroupant plusieurs éléments chauffants (17) dont chacun peut être commandé séparément et un dispositif de commande (16) pour la commande des éléments chauffants (17), la puissance de chauffage étant ainsi réglable séparément pour chacun des éléments chauffants (17),
**caractérisé en ce que** le dispositif de commande (16) est aménagé de telle sorte que par le pilotage des éléments chauffants (17) individuels, une affectation aux éléments chauffants (17) individuels de chacune des puissances de chauffage réglable de façon séparée puisse être modifiée à intervalles de temps ($T_R$) prédéfinis, l'affectation aux éléments chauffants (17) individuels de chacune des puissances de chauffage réglées de façon séparée étant modifiée selon les intervalles de temps prédéfinis, et ce par le renversement des courants versés aux éléments chauffants.

2. Dispositif de chauffage électrique selon la revendication 1, **caractérisé en ce que** la modification d'affectation de la puissance de chauffage des éléments chauffants individuels représente une permutation ou une rotation de la puissance affectée à chacun des éléments chauffants (17) individuels de chacune des puissances de chauffage réglées de façon séparée.

3. Dispositif de chauffage électrique selon la revendication 1 ou 2, **caractérisé en ce que** le dispositif de commande (16) commande au moins l'un des éléments chauffants (17) par une commutation entre une puissance de chauffage maximale et une puissance nulle.

4. Dispositif de chauffage électrique selon l'une quelconque des revendications 1 à 3, **caractérisé en ce que** le dispositif de commande (16) commande au moins l'un des éléments chauffants (17) par une puissance de chauffage substantiellement réglable en continu.

5. Dispositif de chauffage électrique selon la revendication 3 ou 4, **caractérisé en ce que** le dispositif de commande (16) commande l'un des éléments chauffants (17) par une puissance de chauffage réglable en continu et commande tous les autres éléments chauffants (17) par une commutation entre une puissance de chauffage maximale et une puissance nulle.

6. Dispositif de chauffage électrique selon la revendication 4 ou 5, **caractérisé en ce que** le dispositif de commande (16) commande ledit au moins un élément chauffant (17), dont la puissance de chauffage est réglable en continu, par une modulation d'impulsions en largeur.

7. Dispositif de chauffage électrique selon la revendication 6, **caractérisé en ce que** les intervalles de temps prédéfinis ($T_R$) représentent un multiple entier (k) d'une période ($T_{PWM}$) de la modulation d'impulsions en largeur.

8. Dispositif de chauffage électrique selon la revendication 7, **caractérisé en ce que** le dispositif de chauffage comprend au total quatre éléments chauffants (17) pouvant être commandés séparément et **en ce que** les intervalles de temps prédéfinis ($T_R$) correspondent à huit fois la période ($T_{PWM}$) de la modulation d'impulsions en largeur.

9. Procédé de commande d'un dispositif de chauffage électrique, en particulier comme chauffage d'appoint pour véhicules automobiles, comportant plusieurs éléments chauffants (17) regroupés en un bloc chauffant, les éléments pouvant être commandés chacun séparément, la puissance de chauffage pouvant ainsi être réglée séparément pour chacun des éléments chauffants (17),
**caractérisé en ce que** l'affectation aux éléments chauffants (17) individuels de chacune des puissances de chauffage réglées de façon séparée est modifiée à intervalles de temps prédéfinis ($T_R$), et ce par le renversement des courants versés aux éléments chauffants (17).

10. Procédé selon la revendication 9, **caractérisé en ce que** la modification de l'affectation est une permutation ou une rotation des affectations aux éléments chauffants (17) individuels de chacune des puissances de chauffage réglées de façon séparée.

11. Procédé selon la revendication 9 ou 10, **caractérisé en ce que** l'un des éléments chauffants (17) est commandé par une commutation entre une puissance de chauffage maximale et une puissance nulle.

12. Procédé selon l'une quelconque des revendications 9 à 11, **caractérisé en ce qu'**au moins l'un des éléments chauffants (17) est commandé par une puissance de chauffage substantiellement réglable en continu.

13. Procédé selon la revendication 11 ou 12, **caractérisé en ce que** l'un des éléments chauffants (17) est commandé par une puissance de chauffage réglable en continu et tous les autres éléments chauffants (17) sont commandés par une commutation entre une puissance de chauffage maximale et une puissance nulle.

14. Procédé selon la revendication 12 ou 13, **caractérisé en ce que** ledit au moins un élément chauffant (17), dont la puissance de chauffage est réglable en continu, est commandé par une modulation d'impulsions en largeur.

15. Procédé selon la revendication 14, **caractérisé en ce que** les intervalles de temps prédéfinis ($T_R$) représentent un multiple entier (k) d'une période ($T_{PWM}$) d'une modulation d'impulsions en largeur.

P1

P2

P3

P

FIG. 1

FIG. 2

FIG. 3

FIG. 4

FIG. 5

FIG. 6a

FIG. 6b

+

11

18

17

16

μC

FIG. 7

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1157868 A2